(19) Europäisches Patentamt
European Patent Office
Office européen des brevets

(11) EP 1 757 842 A1

(12) **EUROPEAN PATENT APPLICATION**
published in accordance with Art. 158(3) EPC

(43) Date of publication:
**28.02.2007 Bulletin 2007/09**

(21) Application number: **05734260.2**

(22) Date of filing: **14.04.2005**

(51) Int Cl.:
***F16H 55/06*** *(2006.01)*

(86) International application number:
**PCT/JP2005/007563**

(87) International publication number:
**WO 2005/100823 (27.10.2005 Gazette 2005/43)**

(84) Designated Contracting States:
**DE FR GB**

(30) Priority: **14.04.2004 JP 2004119360**

(71) Applicant: **JTEKT CORPORATION**
**Chuo-ku**
**Osaka-shi**
**Osaka 542-8502 (JP)**

(72) Inventors:
- **TAKEI, Tomoyuki**
**c/o JTEKT Corporation**
**Osaka-shi,**
**Osaka 5428502 (JP)**
- **OOTSUKA, Shinta**
**c/o JTEKT Corporation**
**Osaka-shi,**
**Osaka 5428502 (JP)**
- **TSUKAMOTO, Osamu**
**c/o JTEKT Corporation**
**Osaka-shi,**
**Osaka 5428502 (JP)**
- **TAOKA, Nobuyuki**
**c/o JTEKT Corporation**
**Osaka-shi,**
**Osaka 5428502 (JP)**

(74) Representative: **Steil, Christian et al**
**Witte, Weller & Partner,**
**Postfach 10 54 62**
**70047 Stuttgart (DE)**

(54) **PINION SHAFT**

(57) A pinion shaft (7) formed using a non-refined steel as a material comprises a shaft section (71, 72) and a pinion teeth forming section (70) connecting with the shaft section (71,72). The pinion teeth forming section (70) comprises pinion teeth (7a) and a tooth bottom (7b). The pinion teeth forming section (70) and the shaft section (71,72) are provided with a hardened layer (80) that has been subjected to induction hardening and tempering. The steel contains 0.45 to 0.55 % by mass of C, 0.10 to 0.50 % by mass of Si, 0.15 to 0.25 % by mass of Mo, and 0.0005 to 0.005 % by mass of B. The surface hardnesses of the pinion teeth forming section (70) and the shaft section (71,72) are 650 to 760 HV in terms of Vickers hardness.

FIG. 2

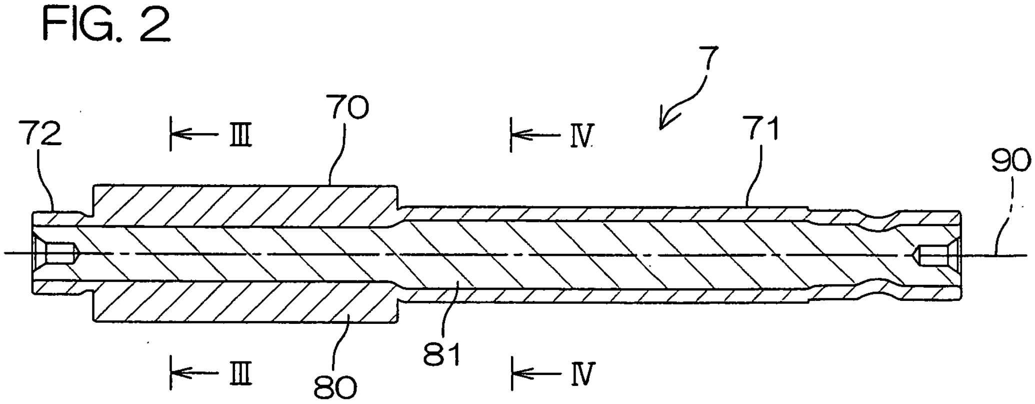




Printed by Jouve, 75001 PARIS (FR)

## Description

### Technical Field

The present invention relates to a pinion shaft used for a steering device in a motor vehicle, for example.

### Background Art

An electric power steering device (EPS) is preferable in energy conservation because the fuel efficiency thereof can be improved by 3 to 5 %, compared with a hydraulic power steering device.

Particularly, an electric power steering device of a pinion assist type has the advantages that a space where it is carried on a vehicle is easier to ensure and the manufacturing cost thereof is lower, as compared with an electric power steering device of a rack assist type, and it has spread mainly among compact cars.

In a conventional general pinion shaft, a refined material that has been subjected to quenching and tempering (refining treatment) after rolling is machined. This causes a problem of high manufacturing costs.

On the other hand, an attempt to obtain a pinion shaft by performing machining without quenching and tempering (refining treatment) after rolling, and then performing surface hardening such as high frequency quenching has been made (see Japanese Patent No. 3036061, for example).

In the electric power steering device of a pinion assist type, stress and surface pressure that are exerted on a meshed portion of a rack bar serving as a steering shaft extending in the horizontal direction of an automobile and a pinion are significantly higher (e.g. six to ten times), as compared with those in the hydraulic power steering device.

On the other hand, even in the electric power steering device of a pinion assist type, a pinion shaft having specifications common to a pinion shaft used in the hydraulic power steering device may, in many cases, be used in order to reduce the cost due to a quantity production effect by making components common to both of the steering devices. Therefore, cars that are larger in size than mid-size vehicles on which high stress and high surface pressure are exerted are at a disadvantage in wear resistance, strength (including static torsional strength and torsional fatigue strength), and toughness. As a result, the employment of the electric power steering device is liable to be limited to compact vehicles.

An object of the present invention is to provide a pinion shaft which is low in cost and capable of withstanding high stress and high surface pressure.

### Disclosure of Invention

In order to attain the above-mentioned object, the present invention provides a pinion shaft formed using a non-refined steel as a material. The pinion shaft comprises a shaft section and a pinion teeth forming section connecting with the shaft section, the pinion teeth forming section comprising pinion teeth and a tooth bottom, the pinion teeth forming section and the shaft section being provided with a hardened layer that has been subjected to high frequency quenching and tempering, the steel containing 0.45 to 0.55 % by mass of C, 0.10 to 0.50 % by mass of Si, 0.15 to 0.25 % by mass of Mo, 0.0005 to 0. 005 % by mass of B, and the surface hardnesses of the pinion teeth forming section and the shaft section being 650 to 760 HV in terms of Vickers hardness.

The reason why the surface hardnesses of the pinion teeth forming section and the shaft section are limited to 650 to 760 HV is as follows. That is, when the surface hardness is less than 650 HV, the surface hardness of the pinion teeth forming section is not sufficient, and the wear resistance of a rack used in combination therewith is low. On the other hand, when the surface hardness exceeds 760 HV, the toughness of a surface layer is deteriorated, and static torsional strength is insufficient. Therefore, the surface hardnesses of the pinion teeth forming section and the shaft section are set to 650 to 760 HV to improve the wear resistance of the rack as well as to ensure sufficient torsional strength for a static load. The preferable lower limit values of the surface hardnesses of the pinion teeth forming section and the shaft section are 680 HV. The upper limit values are preferably 730 HV, and more preferably 710 HV.

It is preferable that the steel further contains 0.5 to 1.2 % by mass of Mn.

It is preferable that the steel further contains at least one type selected from not more than 0.5 % by mass of Cr, not more than 0.5 % by mass of Cu, and not more than 0.5 % by mass of Ni.

It is preferable that the steel further contains not more than 0.025 % by mass of P, not more than 0.025 % by mass of S, 0.005 to 0.10 % by mass of Ti, and not more than 0.015 % by mass of N, and satisfies the following equations 1 and 2, respectively representing the contents (% by mass) of C, Si, Mn, Cr, Mo, Cu, Ni, and Cr by a(C), a(Si), a(Mn), a(Cr), a(Mo), a(Cu), a(Ni), and a(Cr), the residual being composed of Fe and inevitable impurities.

$$\text{Equation 1} \cdots 0.80 \leqq Ceq \leqq 0.95$$

where

$$Ceq = a(C) + 0.07 \times a(Si) + 0.16 \times a(Mn) + 0.20 \times a(Cr) + 0.72 \times a(Mo)$$

$$\text{Equation 2} \cdots f\ value \leqq 1.0$$

where

$$f\ value = 2.78 - 3.2 \times a(C) + 0.05 \times a(Si) - 0.60 \times a(Mn) - 0.55 \times a(Cu) - 0.80 \times a(Ni) - 0.75 \times a(Cr)$$

It is desirable that in order to ensure the tool life in machining of the pinion shaft and the strength of the pinion shaft, the hardness in a steel serving as an inclusion for production after hot rolling for forming the pinion shaft is 24 to 30 HRC. The reason for this is that strength required for the pinion shaft is not obtained when the hardness is less than 24 HRC, while the tool life is reduced to increase the cost, requiring a time period for machining when the hardness exceeds 30 HRC.

On the other hand, in the case of a steel for the pinion shaft, the size of the steel material is 20 to 30 mm, hot rolling conditions are a draft ratio at an area reduction ratio of not less than 10 % at a temperature of not more than 850˚C, and a cooling method is relatively low-cost air blast cooling, atmospheric cooling, or pivot cooling. Accordingly, the hardness of the steel after hot rolling almost depends on the magnitude of Ceq. In order that the hardness may be 24 to 30 HRC, described above, Ceq must be set to 0.80 to 0.95. The reason for this is that the hardness after hot rolling does not reach 24 HRC when Ceq is less than 0.80, while it is higher than 30 HRC, making the steel too hard, deteriorating the machinability, and thereby deteriorating tooth form accuracy when Ceq is more than 0.95.

Similarly, in the case of the steel for a pinion shaft, the ferrite amount therein almost depends on the magnitude of the f value. In order that the ferrite amount may be a ferrite area ratio of not more than 40 % required as the steel for a pinion shaft, the f value must be set to not more than 1.0. The reason for this is as follows.

That is, when a large amount of ferrite exists in a tissue before high frequency quenching, C is not sufficiently diffused into the ferrite in heat treatment for a short time, for example, high frequency quenching, and the ferrite remains in the tissue after high frequency quenching. The remaining ferrite causes the bending and torsional strength to be reduced. Further, uniform hardness is not easily obtained, and the wear resistance is also deteriorated.

It is considered that in order to reduce the amount of the remaining ferrite, heating for a long time and heating at high temperature is performed in high frequency quenching. When heating for a long time is performed, however, the depth of a hardened layer is too deep, which causes the strain of the pinion shaft to be manufactured to be increased and causes the fatigue strength to be reduced due to the reduction in residual stress in the vicinity of a surface. On the other hand, when heating at high temperature is performed, crystal grains in a high frequency quenched layer are coarsened, which leads to deterioration of the toughness. Consequently, it is desirable that the ferrite amount before high frequency quenching is not more than 40 %. For that purpose, the f value is set to not more than 1.0.

In the present invention, it is preferable that the ratio D/R of the effective case depth D in the tooth bottom (corresponding to a depth to an area 450 HV apart from the surface) to the radius R of the tooth bottom is 0.1 to 0.5. When the ratio D/R exceeds 0.5, the strain of the pinion teeth is increased. On the other hand, when the ratio D/R is less than 0.1, the static torsional strength and the torsional fatigue strength of the pinion teeth are liable to be insufficient. Therefore, the ratio D/R is set in a range of 0.1 to 0.5 to prevent the strain of the pinion teeth while ensuring the static torsional strength and the torsional fatigue strength of the pinion teeth. The preferable lower limit value of the ratio D/R

is 0.2, and the more preferable upper limit value thereof is 0.4.

In the present invention, it is preferable that the ratio d/r of the effective case depth d in the shaft section to the radius r of the shaft section is 0.05 to 0. 6. In a case where the ratio d/r is less than 0.05, the static torsional strength and the torsional fatigue strength of the shaft section are liable to be insufficient, and a fatigue fracture at an inner starting point is liable to occur. On the other hand, when the ratio d/r exceeds 0.7, the toughness is deteriorated, and the manufacturing cost is high, which is not practical. Therefore, the ratio d/r is set in a range of 0.05 to 0.6 to ensure the toughness while ensuring the static torsional strength and the torsional fatigue strength of the shaft section. The preferable lower limit value of the ratio d/r is 0.35. The more preferable upper limit value of the ratio d/r is 0.5. In the case of the above-mentioned pinion shaft, high wear resistance and high strength (static strength, fatigue strength, impact strength) can be achieved using a low-cost non-refined steel. Therefore, the pinion shaft can be suitably used for a high-power electric power steering device of a pinion assist type that receives high stress and high surface pressure.

Brief Description of Drawings

Fig. 1 is a schematic view of an electric power steering device of a pinion assist type to which a pinion shaft according to an embodiment of the present invention is applied.
Fig. 2 is a cross-sectional view of the pinion shaft.
Fig. 3 is a cross-sectional view taken along a line III - III shown in Fig. 2.
Fig. 4 is a cross-sectional view taken along a line IV - IV shown in Fig. 2.
Fig. 5 is a schematic view of a tester for a positive input static fracture test.
Fig. 6 is a schematic view of a tester for a reverse input static fracture test.
Fig. 7 is a schematic view of a tester for a reverse input impact test.
Fig. 8 is a schematic view of a tester for a positive input durability test.
Fig. 9 is a schematic view of a tester for a reverse input durability test.

Best Mode for Carrying Out the Invention

A preferred mode of the present invention will be described while referring to the accompanying drawings.

Fig. 1 is a schematic view of an electric power steering device using a steering rack according to an embodiment of the present invention. Referring to Fig. 1, an electric power steering device (EPS : Electric Power Steering System) 1 has a steering shaft 3 connected to a steering member 2 such as a steering wheel, an intermediate shaft 5 connected to the steering shaft 3 through a universal joint 4, a pinion shaft 7 connected to the intermediate shaft 5 through a universal joint 6, and a rack bar 8 serving as a steering shaft having rack teeth 8a meshed with pinion teeth 7a provided in the vicinity of an end of the pinion shaft 7 and extending in the horizontal direction of a motor vehicle.

The rack bar 8 is supported so as to be linearly movable back and forth through a plurality of bearings (not shown) within a housing 9 fixed to a vehicle body. Both ends of the rack bar 8 project on both sides from the housing 9, and a tie rod 10 is coupled to each of the ends. Each of the tie rods 10 is connected to a corresponding steerable wheel 11 through a corresponding knuckle arm (not shown).

When the steering member 2 is operated so that the steering shaft 3 is rotated, the rotation is converted into the linear motion of the rack bar 8 in the horizontal direction of the motor vehicle by the pinion teeth 7a and the rack teeth 8a. Consequently, the steering of the steerable wheel 11 is achieved.

The steering shaft 3 is divided into an input shaft 3a connecting with the steering member 2 and an output shaft 3b connecting with the pinion shaft 7. The input and output shafts 3a and 3b are connected to each other so as to be relatively rotatable on the same axis through a torsion bar 12.

There is provided a torque sensor 13 for detecting a steering torque by an amount of displacement by relative rotation between the input and output shafts 3a and 3b through the torsion bar 12. The results of the detection of the torque by the torque sensor 13 are given to an ECU (Electronic Control Unit) 14. The ECU 14 controls an applied voltage to an electric motor 16 for steering assist through a driving circuit 15 on the basis of the results of the detection of the torque, the results of the detection of a vehicle speed given from a vehicle speed sensor (not shown), and so forth. The output rotation of the electric motor 16 is decelerated through a speed reduction mechanism 17 and is transmitted to the pinion shaft 7, and is converted into the linear motion of the rack bar 8, assisting in steering.

Exemplified as the speed reduction mechanism 17 is a gear mechanism comprising a pinion 17a such as a worm shaft connected to a rotating shaft (not shown) of the electric motor 16 so as to be integrally rotatable and a wheel 17b such as a worm wheel meshed with the pinion 17a and connected to the pinion shaft 7 so as to be integrally rotatable.

Fig. 2 is a cross-sectional view of the pinion shaft, Fig. 3 is a cross-sectional view taken along a line III - III shown in Fig. 2, and Fig. 4 is a cross-sectional view taken along a line IV - IV shown in Fig. 2. Referring to Fig. 2, the

pinion shaft 7 comprises a pinion teeth forming section 70, and a pair of shaft sections 71 and 72 extending coaxially with an axis 90 on both sides of the pinion teeth forming section 70. The shaft section 71 is composed of a long shaft, and is arranged on the side of the intermediate shaft 5. The shaft section 72 is composed of a short shaft.

Referring to Fig. 3, the pinion teeth forming section 70 comprises a plurality of pinion teeth 7a formed with equal spacing in the circumferential direction, and a tooth bottom 7b interposed between the adjacent pinion teeth 7a.

The pinion shaft 7 is machined using a low-cost non-refined steel as a material so that the shape thereof is formed, and is then subjected to high frequency quenching and tempering. Consequently, as shown in Figs. 2, 3 and 4, the pinion teeth forming section 70 and the shaft sections 71 and 72 are provided with a hardened layer 80 that has been subjected to high frequency quenching and tempering as surface hardening, and a difference in hardness is provided between the hardened layer 80 and a shaft interior 81 inside thereof.

The steel contains 0.45 to 0.55 % by mass of C, 0.15 to 0.25 % by mass of Mo, and 0.0005 to 0.005 % by mass of B.

The non-refined steel containing 0.45 to 0.55 % by mass of C is subjected to high frequency quenching so that wear resistance and toughness required as a pinion shaft are provided thereto. That is, when the C content is not less than 0.45 % by mass, the wear resistance of the pinion shaft 7 can be enhanced by high frequency quenching. On the other hand, when the C content exceeds 0.55 % by mass, the impact resistance is deteriorated, and quenching cracks are liable to occur at the time of high frequency quenching. Therefore, the C content is set in the range of 0.45 to 0.55 % by mass.

Addition of Mo enhances the hardenability, strengthens the inside of a crystal grain boundary, and improves the resistance to the action of impact stress in the hardened layer 80 obtained by high frequency quenching, thereby allowing the occurrence of cracks due to impact to be suppressed. For that purpose, not less than 0.15 % by mass of Mo must be contained. If the Mo content is high, however, martensite is produced in a rolled state, and the steel becomes hard, thereby deteriorating the machinability. Therefore, the upper limit of the Mo content is set to 0.25 % by mass. Particularly, Mo is added in combination with B, and hardening for improving the toughness of the hardened layer 80 obtained by high frequency quenching is further promoted.

B suppresses grain boundary segregation of P that is an inevitable impurity to strengthen a grain boundary, thereby allowing the toughness of the hardened layer 80 to be improved. For that purpose, not less than 0.0005 % by mass of B must be contained. If the B content is too high, however, crystal grains are coarsened to deteriorate the toughness. Therefore, the upper limit of the B content is set to 0.005 % by mass.

As the other components, the steel contains 0.10 to 0.50 % by mass of Si, 0.50 to 1.20 % by mass of Mn, not more than 0.025 % by mass of P, not more than 0.025 % by mass of S, not more than 0.50 % by mass of Cu, not more than 0.50 % by mass of Ni, not more than 0.50 % by mass of Cr, 0.005 to 0.1 % by mass of Ti, and not more than 0.015 % by mass of N, and the remaining components are Fe and inevitable impurities.

Since Si has a deoxidation action in melting the steel, it is an element to be contained for that purpose. In order to obtain the action and effect, not less than 0.10 % by mass of Si must be contained. If the Si content is too high, however, the toughness of the steel is deteriorated. Therefore, the upper limit of the Si content is set to 0.50 % by mass.

Since Mn has a deoxidation action in melting the steel and improves the hardenability of the steel, it is an element to be contained for that purpose. In order to obtain the action and effect, not less than 0.50 % by mass of Mn must be contained. If the Mn content is too high, the hardness of the steel becomes too high. Therefore, the upper limit of the Mn content is set to 1.2 % by mass.

P is an inevitable impurity, and is an element for reducing the toughness by grain boundary segregation as well as promoting the occurrence of quenching cracks in high frequency quenching. Therefore, it is preferable that the P content is low. Even if the P content is reduced, however, the effect is saturated, and the cost is high. Therefore, the upper limit of the P content is set to 0.025 % by mass.

S is an inevitable impurity, and forms a sulfide inclusion to be a starting point of a fatigue fracture, thereby reducing the fatigue strength. Further, it causes the occurrence of quenching cracks. Consequently, it is preferable that the S content is low. If the S content becomes significantly low, the machinability is deteriorated. Therefore, the upper limit of the S content is set to 0.025 % by mass.

Since Ti forms TiN to fix N in the steel and prevents the production of BN to increase the effective amount of B, it is an element to be contained for that purpose. In order to fix N to exhibit the effect of B, not less than 0.005 % by mass of N must be contained. If the N content is too high, the toughness is deteriorated. Therefore, the upper limit of the N content is set to 0.10 % by mass.

N is an inevitable impurity, and forms a nitride non-metal in the steel to reduce the fatigue strength. Therefore, the upper limit of the N content is set to 0.015 % by mass.

Cu may be contained in order to control the f value. When the Cu content is high, however, the hot workability of the steel is deteriorated. Therefore, the upper limit of the Cu content is set to 0.50 % by mass.

Ni may be contained in order to control the f value. When the Ni content is high, however, the machinability of the steel is deteriorated. Therefore, the upper limit of the Ni content is set to 0.50 % by mass.

Cr may be contained in order to control the f value. When the Cr content is high, however, the hardenability of the steel is increased, and martensite is produced in a rolled state. Therefore, the hardness is too high, to deteriorate the machinability. Therefore, the upper limit of the Cr content is set to 0.50 % by mass.
Since Nb and Ta refine the tissue of the high frequency quenched layer to improve the toughness, they are elements to be contained for that purpose. If the Nb and Ta contents are high, the effect is saturated. Therefore, the upper limits of the Nb and Ta contents are set to 0.20 % by mass.
Since Zr refines the tissue of the high frequency quenched layer to improve the toughness, forms an oxide as a nucleous of a sulfide, and improves the extensibility of MnS to form a granular sulfide, thereby improving the torsional fatigue strength, it is an element to be contained for that purpose. If the Zr content is high, however, the effect is saturated. Therefore, the upper limit of the Zr content is set to 0.10 % by mass.
Since Al has a strong deoxidation action in melting the steel and refines crystal grains to improve the toughness, it is an element to be contained for that purpose. If the A1 content is too high, however, the amount of an $Al_2O_3$ inclusion is increased to reduce the fatigue strength. Therefore, the upper limit of the A1 content is set to 0.10 % by mass.
It is preferable that the above-mentioned steel satisfies the following equations 1 and 2, respectively representing the contents (% by mass) of C, Si, Mn, Cr, Mo, Cu, Ni, and Cr by a(C), a(Si), a(Mn), a(Cr), a(Mo), a(Cu), a(Ni).

$$\text{Equation 1} \cdots 0.80 \leqq Ceq \leqq 0.95$$

where

$$Ceq = a(C) + 0.07 \times a(Si) + 0.16 \times a(Mn) + 0.20 \times a(Cr) + 0.72 \times a(Mo)$$

$$\text{Equation 2} \cdots f\ value \leqq 1.0$$

where

$$f\ value = 2.78 - 3.2 \times a(C) + 0.05 \times a(Si) - 0.60 \times a(Mn) - 0.55 \times a(Cu) - 0.80 \times a(Ni) - 0.75 \times a(Cr)$$

It is desirable that in order to ensure the tool life in machining of the pinion shaft and the strength of the pinion shaft, the hardness in an inclusion for production after hot rolling for forming the pinion shaft is 24 to 30 HRC. The reason for this is that strength required for the pinion shaft is not obtained when the hardness is less than 24 HRC, while the tool life is reduced to increase the cost, requiring a time period for machining when the hardness exceeds 30 HRC.
On the other hand, in the case of a steel for the pinion shaft, the size of the steel material is 20 to 30 mm, hot rolling conditions are a draft ratio at an area reduction ratio of not less than 10 % at a temperature of not more than 850˚C, and a cooling method is relatively low-cost air blast cooling, atmospheric cooling, or pivot cooling. Accordingly, the hardness of the steel after hot rolling almost depends on the magnitude of Ceq. In order that the hardness may be 24 to 30 HRC, described above, Ceq must be 0.80 to 0.95. The reason for this is that the hardness after hot rolling does not become not less than 24 HRC when Ceq is less than 0.80, while it is higher than 30 HRC, making the steel too hard, deteriorating the machinability, and thereby deteriorating tooth form accuracy when Ceq is more than 0.95.
Similarly, in the case of the steel for a pinion shaft, the ferrite amount therein almost depends on the magnitude of the f value. In order that the ferrite amount may be a ferrite area ratio of not more than 40 % required as the steel for a pinion shaft, the f value must be set to not more than 1.0.
When a large amount of ferrite exists in a tissue before high frequency quenching, C is not sufficiently diffused into the ferrite in heat treatment for a short time, for example, high frequency quenching, and the ferrite remains in the

tissue after high frequency quenching. The residual ferrite causes the bending and torsional strength to be reduced. Further, uniform hardness is not easily obtained, and the wear resistance is also deteriorated.

It is considered that in order to reduce the amount of the residual ferrite, heating for a long time or heating at high temperature is performed in high frequency quenching. When heating for a long time is performed, however, the depth of a hardened layer is too high, which causes the strain of the pinion shaft to be manufactured to be increased and causes the fatigue strength to be reduced due to the reduction in residual stress in the vicinity of a surface. On the other hand, when heating at high temperature is performed, crystal grains in a high frequency quenched layer are coarsened, which leads to deterioration of the toughness. Consequently, it is desirable that the ferrite amount before high frequency quenching is not more than 40 %. For that purpose, the f value is set to not more than 1.0.

It is preferable that the tissue after hot rolling is a three-phase texture of ferrite + perlite + bainite. The reason for this is that when martensite exists, the hardness after hot rolling becomes significantly high, and the impact value is reduced.

Furthermore, it is preferable that the maximum perlite block size in the tissue after hot rolling is not more than 100 $\mu$m in terms of a circle-equivalent diameter for the following reasons. That is, in order to suppress the occurrence of peeling at the time of hobbing, it is effective to refine the tissue. This is because peeling occurs by stripping at the time of hobbing particularly if a perlite block is coarse. Considering the surface finish accuracy of a practical pinion shaft, it is preferable that the circle-equivalent diameter of the perlite block is set to not more than 100 $\mu$m.

The surface hardnesses of the pinion teeth forming section 70 and the shaft sections 71 and 72 are set to 650 to 760 HV. The reason for this is that the surface hardness of the pinion teeth forming section 70 is not sufficient, and the wear resistance of a rack used in combination therewith is low when the surface hardness is less than 650 HV, while the toughness of a surface layer is deteriorated, and the static torsional strength is insufficient when the surface hardness exceeds 760 HV. Therefore, the surface hardnesses of the pinion teeth forming section 70 and the shaft sections 71 and 72 are set to 650 to 760 HV to enhance the wear resistance of the rack as well as to ensure sufficient torsional strength for a static load. The preferable lower limit values of the surface hardnesses of the pinion teeth forming section 70 and the shaft sections 71 and 72 are 680 HV, and the more preferable upper limit values thereof are 710 HV.

Referring to Fig. 3, the ratio (hardened layer ratio) D/R of the effective depth of the hardened layer 80 in the tooth bottom 7b, that is, the effective case depth D in the tooth bottom 7b (corresponding to a depth to an area 450 HV apart from the surface) to the radius R of the tooth bottom 7b is set in a range of 0.1 to 0.5. When the ratio D/R exceeds 0.5, the strain of the pinion teeth is increased. On the other hand, when the ratio D/R is less than 0.1, the static torsional strength and the torsional fatigue strength of the pinion teeth are liable to be insufficient. Therefore, the ratio D/R is set in a range of 0.1 to 0.5 to prevent the strain of the pinion teeth 7a while ensuring the static torsional strength and the torsional fatigue strength of the pinion teeth 7a. The preferable lower limit value of the ratio D/R is 0.2, and the preferable upper limit value thereof is 0.4.

Referring to Fig. 4, the ratio (hardened layer ratio) d/r of the effective depth of the hardened layer 80 in the shaft sections 71 and 72, that is, the effective case depth d in the shaft sections 71 and 72 to the radius r of the shaft sections is set in a range of 0.05 to 0.6. In a case where the ratio d/r is less than 0.05, the static torsional strength and the torsional fatigue strength of the shaft sections 71 and 72 are liable to be insufficient, and a fatigue fracture at an inner starting point is liable to occur. On the other hand, when the ratio d/r exceeds 0.6, the toughness is deteriorated, and the manufacturing cost is high, which is not practical. Therefore, the ratio d/r is set in a range of 0.05 to 0.6 to ensure the toughness and the practicability in cost while ensuring the static torsional strength and the torsional fatigue strength of the shaft sections 71 and 72. The preferable lower limit value of the ratio d/r is 0.35. The more preferable upper limit value of the ratio d/r is 0.5.

It is preferable that in the pinion teeth forming section 70 and the shaft sections 71 and 72, the Vickers hardness in a portion deeper than the hardened layer 80 is 260 to 300 HV. When the hardness of a shaft interior 81 is less than 260 HV, the strength of the pinion shaft 7 is not obtained. When the hardness exceeds 300 HV, the toughness of the whole pinion shaft 7 is deteriorated, the tool life in hobbing is shortened, and a long time period is required for the hobbing. Therefore, the hardness is set in the above-mentioned range to allow strength to be ensured and allow the productivity to be maintained and improved. The preferable lower limit value of the hardness of the shaft interior 81 is 270 HV, and the more preferable upper limit value thereof is 290 HV.

In the case of the above-mentioned pinion shaft 7, high wear resistance and high strength (static strength, fatigue strength, impact strength) can be achieved using a low-cost non-refined steel. Therefore, the pinion shaft 7 can be suitably used for a high-power electric power steering device of a pinion assist type that receives high stress and high surface pressure.

Although the present invention has been described in more detail by specific modes, those skilled in the art who have understood the above-mentioned contents will easily consider its change, modification, and equivalent. Therefore, the range of the present invention should be the scope of claims and the scope of its equivalent.

The present application corresponds to Japanese Patent Application No. 2004-119360 filed with the Japanese Patent Office on April 14, 2004, and the entire disclosure of the application is incorporated herein by reference.

The present invention will be more specifically described by taking examples.

Examples and Comparative Examples

Steels in examples of the present invention and comparative examples, which have ingredients shown in Table 1, described below, were respectively melted and then formed into billets, and were hot rolled under a draft ratio of 15 % at a temperature of not more than 800˚C, to form a material composed of a round rod having a diameter of 23 mm. A non-refined steel that is the material was machined, to produce an intermediate for production having the shape of a pinion shaft formed therein, and the intermediate for production was then subjected to high frequency quenching by high frequency heating to a temperature of 900 to 1000˚C and cooled to room temperature by water cooling, thereafter, the intermediate for production was subjected to tempering processing at an atmospheric temperature of 150˚C and for a processing time of one hour, to form the hardened layer 80, thereby manufacturing pinion shafts in the examples and the comparative examples. Each of the pinion shafts was so adapted that the length thereof was 130 mm, the average diameter of a shaft section was 15 mm, and the outer diameter of a tooth section was 20 mm, and has five rows of teeth.
A positive input static fracture test, a reverse input static fracture test, a reverse input impact fracture test, a positive input durability test, and a reverse input durability test were carried out using the examples and the comparative examples. The Vickers hardnesses on surfaces of a pinion teeth forming section and the shaft section were measured, and the tooth form accuracy after gear cutting of the pinion teeth was measured. As a result, the following results shown in Table 2 were obtained. Each of the tests will be specifically described.
In each of the examples and the comparative examples, the ratio D/R of the effective case depth D in the tooth bottom 7b to the radius R of the tooth bottom 7b was 0.3, and the ratio d/r of the effective case depth d in the shaft sections 71 and 72 to the radius r of the shaft sections 71 and 72 was 0.3.

Positive input static fracture test

A tester as shown in Fig. 5 was used. Both ends of the housing 9 for holding the rack bar 8 meshed with the pinion shaft 7 in the example or the pinion shaft in the comparative example were respectively fixed to fixing supports 31. The rack bar 8 was fixed at its neutral position, and a driving torque was applied to the pinion shaft 7 from a rotary actuator 32 connected to the pinion shaft 7. The driving torque was increased, to lead to a fracture. Fracture strength (N·m) was measured. In Table 2, references ○, Δ, and × are as follows:

○: not less than 600 N·m
Δ : not less than 400 N·m and less than 600 N·m
× : less than 400 N·m

Reverse input static fracture test

A tester as shown in Fig. 6 was used. Both ends of the housing 9 for holding the rack bar 8 meshed with the pinion shaft 7 in the example or the pinion shaft in the comparative example were respectively fixed to fixing supports 31 through mount rubbers 33. The pinion shaft 7 was fixed at its neutral position through a joint 34, an end of the rack bar 8 was pressed by a load cylinder 35 through a load cell 36, and a load was applied until a fracture sound (cracking sound) was confirmed. An output of an dynamic strain indicator 37 connected to the load cell 36 was recorded on a recorder 38, to measure a fracture load (kN). In Table 2, references ○, Δ, and × are as follows:

○ : not less than 80 kN
Δ : not less than 60 kN and less than 80 kN
× : less than 60 kN

Reverse input impact fracture test

A tester as shown in Fig. 7 was used. Both ends of the housing 9 for holding the rack bar 8 meshed with the pinion shaft 7 in the example or the pinion shaft in the comparative example were respectively fixed to a pair of fixing arms 40 fixed to a fixing support 39. The housing 9 was raised and arranged with its end closer to the pinion shaft 7 located above. The pinion shaft 7 was fixed to a fixing support 41 at its neutral position. A receiving member 42 was fixed to an end, closer to the pinion shaft 7, of the rack bar 8.
A plumb bob 44 supported so as to be movable up and down by a guide bar 43 was provided above the receiving member 42, and a load cell 45 was fixed to the bottom of the plumb bob 44. The weight of the plumb bob 44 to which the load cell 45 was fixed was 0.98 kN. The plumb bob 44 and the load cell 45 were dropped with the distance between the load cell 45 and the receiving member 42 set to 20 cm, to collide with the receiving member 42 and examine the number of times of drop until they are damaged.

A dynamic strain indicator 46 was connected to the load cell 45, and an output of the dynamic strain indicator 46 was recorded on an electromagnetic oscilloscope 47, to measure reverse input impact strength (kN × the number of times). In Table 2, references ○, Δ, and × are as follows:

○ : not less than 500 (kN × the number of times)
Δ : not less than 200 (kN × the number of times) and less than 500 (kN × the number of times)
× : less than 200 (kN × the number of times)

Positive input durability test

A tester as shown in Fig. 8 was used. Both ends of the housing 9 for holding the rack bar 8 meshed with the pinion shaft 7 in the example or the pinion shaft in the comparative example were respectively fixed to fixing supports 54. Servo actuators 55 were respectively connected to both ends of the rack bar 8. A rotary actuator 58 was connected to the pinion shaft 7 through a joint 56 and a torque meter 57, and a driving torque was applied to the pinion shaft 7 by the rotary actuator 58. The driving torque was set to 50 N·m, and the number of repetitions was set to 30000 at a frequency of 0.15 Hz. After the test was terminated, an amount of wear of a meshed portion with rack teeth was measured. In Table 2, large, medium, and small references of the amount of wear were as follows:

small amount of wear : not more than 20 μm
medium amount of wear : more than 20 μm and not more than 50 μm
large amount of wear : more than 50 μm

Reverse input durability test

A tester as shown in Fig. 9 was used. Both ends of the housing 9 for holding the rack bar 8 meshed with the pinion shaft 7 in the example or the pinion shaft in the comparative example were respectively fixed to fixing supports 59. The pinion shaft 7 was fixed at its neutral position through a joint 60, and an axial force was loaded to the rack bar from a servo actuator 61 through a tie rod 10 connecting with an end, closer to the pinion shaft 7, of the rack bar. The axial force loaded to the rack bar was set to 10 kN, and the number of repetitions was set to 700000 at a frequency of 5 Hz. After the test was terminated, an amount of wear of a meshed portion with rack teeth was measured. In Table 2, large, medium, and small references of the amount of wear were as follows:

small amount of wear : not more than 60 μm
medium amount of wear : more than 60 μm and not more than 100 μm
large amount of wear : more than 100 μm

Tooth form accuracy measurement test

A tooth form error after gear cutting of pinion teeth in each of the pinion shafts in the examples and the comparative examples was found. Specifically, the maximum error in all the teeth (all teeth Max.) was found. In Table 2, large, medium, and small references of the maximum error were as follows:

small maximum error : not more than 10 μm
medium maximum error : more than 10 μm and not more than 30 μm
large maximum error : more than 30 μm

Table 1 (mass%)

| No. | C | Si | Mn | P | S | Mo | B | Ti | N | Others | Ceq | f-value |
|---|---|---|---|---|---|---|---|---|---|---|---|---|
| Examples | | | | | | | | | | | | |
| 1 | 0.50 | 0.21 | 0.78 | 0.016 | 0.017 | 0.17 | 0.0015 | 0.04 | 0.008 | Cr:0.22 | 0.81 | 0.35 |
| 2 | 0.54 | 0.26 | 0.74 | 0.016 | 0.015 | 0.17 | 0.0016 | 0.045 | 0.008 | | 0.85 | 0.00 |
| 3 | 0.52 | 0.45 | 1.10 | 0.015 | 0.015 | 0.20 | 0.0015 | 0.04 | 0.008 | Cr:0.30 | 0.93 | 0.12 |
| 4 | 0.45 | 0.25 | 1.00 | 0.015 | 0.015 | 0.23 | 0.0015 | 0.04 | 0.008 | | 0.82 | 0.50 |

(continued)

| No. | C | Si | Mn | P | S | Mo | B | Ti | N | Others | Ceq | f-value |
|---|---|---|---|---|---|---|---|---|---|---|---|---|
| Examples | | | | | | | | | | | | |
| 5 | 0.49 | 0.28 | 0.82 | 0.016 | 0.015 | 0.19 | 0.0013 | 0.04 | 0.009 | Cu: 0.30, Ni: 0.25, Cr: 0.18, Ta:0.06, Al: 0.05 | 0.81 | 0.28 |
| Comparative Examples | | | | | | | | | | | | |
| 1 | 0.45 | 0.25 | 0.70 | 0.015 | 0.015 | 0.23 | 0.0015 | 0.04 | 0.008 | | 0.78 | 0.75 |
| 2 | 0.41 | 1.10 | 0.55 | 0.015 | 0.016 | 0.26 | 0.0015 | 0.04 | 0.008 | | 0.80 | 1.02 |
| 3 | 0.56 | 0.65 | L 10 | 0.015 | 0.015 | 0.20 | 0.0016 | 0.04 | 0.008 | | 0.98 | 0.03 |
| 4 | 0.60 | 0.24 | 0.85 | 0.016 | 0.015 | 0.20 | 0.0019 | 0.04 | 0.010 | | 0.92 | 0.12 |
| 5 | 0.51 | 0.25 | 0.83 | 0.015 | 0.015 | 0.12 | 0.0015 | 0.04 | 0.008 | | 0.78 | 0.42 |
| 6 | 0.49 | 0.30 | 0.60 | 0.015 | 0.015 | 0.30 | 0.0015 | 0.04 | 0.008 | | 0.82 | 0.86 |
| 7 | 0.51 | Q 65 | 0.76 | 0.017 | 0.018 | 0.21 | 0.0002 | 0.035 | 0.010 | | 0.86 | 0.44 |
| 8 | 0.53 | 0.08 | 0.82 | 0.014 | 0.017 | 0.16 | 0.0078 | 0.11 | 0.018 | | 0.81 | 0.31 |

Table 2

| | Static breakdown test | | Reverse input impact breakdown | Endurance test | | Tooth profile error | Hv |
|---|---|---|---|---|---|---|---|
| | Normal input | Reverse input | | Normal input | Reverse input | | |
| Example 1 | ○ | ○ | ○ | Smaller | Smaller | Smaller | 715 |
| Example 2 | ○ | ○ | ○ | Smaller | Smaller | Smaller | 718 |
| Example 3 | ○ | ○ | ○ | Smaller | Smaller | Smaller | 760 |
| Example 4 | ○ | ○ | ○ | Smaller | Smaller | Smaller | 650 |
| Example 5 | ○ | ○ | ○ | Smaller | Smaller | Smaller | 709 |
| Comparative Example 1 | Δ | Δ | Δ | Medium | Medium | Medium | 620 |
| Comparative Example 2 | Δ | Δ | × | Greater | Greater | Medium | 570 |
| Comparative Example 3 | Δ | Δ | × | Smaller | Smaller | Medium | 730 |
| Comparative Example 4 | ○ | ○ | × | Smaller | Smaller | Medium | 770 |
| Comparative Example 5 | Δ | Δ | × | Medium | Medium | Greater | 720 |
| Comparative Example 6 | ○ | ○ | ○ | Medium | Medium | Greater | 705 |
| Comparative Example 7 | Δ | Δ | × | Smaller | Smaller | Smaller | 718 |
| Comparative Example 8 | Δ | Δ | Δ | Smaller | Smaller | Smaller | 734 |

From the results shown in Table 2, in any of the examples 1 to 5 in the present invention, the positive input static fracture strength was not less than 600 N·m, the reverse input static fracture strength was not less than 80 kN, the amount of wear in the positive input durability test was not more than 20 μm, the amount of wear in the reverse input durability test was not more than 60 μm, the surface hardness was 650 to 760 HV, and the tooth form error was as small as 10 μm or less.

Contrary to this, in the comparative example 1 in which Ceq was 0.78, which was somewhat lower than those in the examples 1 to 5 in the present invention, the surface hardness was 620 HV, which was somewhat lower, the static fracture strength and the reverse input impact fracture strength were lower, the amount of wear in the durability test was larger, and the tooth form error was larger, as compared with those in the examples 1 to 5 in the present invention.

In the comparative example 2 in which the C content was 0.41 % by mass, which was somewhat lower, the Si content was 1.10 % by mass, which was significantly higher, and the f value was 1.02, which was higher, as compared with those in the examples 1 to 5 in the present invention, the surface hardness was 570 HV, which was significantly lower, the static fracture strength was lower, the reverse input impact fracture strength was significantly lower, the amount of wear in the durability test was larger, and the tooth form error was larger, as compared with those in the examples 1 to 5 in the present invention.

In the comparative example 3 in which Ceq was 0.98, which was higher than those in the examples 1 to 5 in the present invention, the static fracture strength was lower, the reverse input impact fracture strength was significantly lower, the amount of wear by the durability test was larger, and the tooth form error was larger, as compared with those in the examples 1 to 5 in the present invention.

In the comparative example 4 in which the C content was higher than those in the examples 1 to 5 in the present invention, the reverse input impact fracture strength was significantly lower, and the tooth form error was larger, as compared with those in the examples 1 to 5 in the present invention.

In the comparative example 5 in which the Mo content was somewhat lower than those in the examples 1 to 5 in the present invention, and Ceq was somewhat lower than those in the examples 1 to 5 in the present invention, the static fracture strength was somewhat lower, the reverse input impact fracture strength was significantly lower, the amount of wear by the durability test was larger, and the tooth form error was larger, as compared with those in the examples in the present invention.

In the comparative example 6 in which the Mo content was higher than those in the examples 1 to 5 in the present invention, the amount of wear by the durability test was larger, and the tooth form error was significantly larger, as compared with those in the examples 1 to 5 in the present invention.

In the comparative example 7 in which the Si content was higher than those in the examples 1 to 5 in the present invention, and the B content was lower than those in the examples 1 to 5 in the present invention, the static fracture strength (corresponding to torsional strength) was lower, and the reverse input impact fracture strength was significantly lower, as compared with those in the examples 1 to 5 in the present invention.

In the comparative example 8 in which the Ti content and the N content were higher than those in the examples 1 to 5 in the present invention, the static fracture strength (corresponding to torsional strength) and the reverse input fracture strength were lower, as compared with those in the examples 1 to 5 in the present invention.

<u>Hardened layer ratio test 1</u>

Examples 6 to 11, in which only the conditions of induction hardening in the example 1 were varied, to make the effective case depth D in the tooth bottom 7b differ to make only the ratio (hardened layer ratio) D/R of the effective case depth D in the tooth bottom 7b to the radius R of the tooth bottom 7b differ, as shown in Table 3, described below, were prepared. When the same positive input static fracture test and tooth form accuracy measurement test as the foregoing were carried out, to obtain results shown in Table 3.

Table 3

| | Hard layer ratio D/R | Normal input static breakdown test | Tooth profile error |
|---|---|---|---|
| Comparative Example 9 | 0.05 | × | Smaller |
| Example 6 | 0.1 | Δ | Smaller |
| Example 7 | 0.2 | ○ | Smaller |
| Example 1 | 0.3 | ○ | Smaller |
| Example 8 | 0.4 | ○ | Smaller |
| Example 9 | 0.5 | ○ | Medium |

(continued)

| | Hard layer ratio D/R | Normal input static breakdown test | Tooth profile error |
|---|---|---|---|
| Example 10 | 0.6 | ○ | Greater |

According to the results shown in Table 3, it became clear that sufficient torsional strength was obtained if the ratio D/R was not less than 0.1 (example 1 and examples 6 to 10), while higher torsional strength (static fracture strength) was obtained if the ratio D/R was not less than 0.2 (example 1 and examples 7 to 10). Further, it became clear that the tooth form error fell within an allowable level if the ratio D/R was not more than 0.5 (example 1 and examples 6 to 9), while the tooth form error could be even smaller if the ratio D/R was not more than 0.4 (example 1 and examples 6 to 8).
As a result, it became clear that preferable results were obtained in both the torsional strength and the tooth form error (maximum error) if the ratio D/R was in a range of 0.1 to 0.5. Further, it became clear that more preferable results were obtained in both the torsional strength and the tooth form error (maximum error) if the ratio D/R was in a range of 0.2 to 0.4.

Hardened layer ratio test 2

Examples 11 to 15, in which only the conditions of induction hardening in the example 1 were varied, to make only the ratio (hardened layer ratio) d/r of the effective case depth d in the shaft sections 71 and 72 to the radius r of the shaft sections differ, as shown in Table 4, described below, were prepared. The same positive input static fracture test as the foregoing and a torsional fatigue test as shown in the following were carried out, to obtain results shown in Table 4.
Torsional fatigue test: A torsional fatigue test using a test specimen for torsional fatigue test (a smooth test specimen having a diameter of 12 mm and having a length of 100 mm in its parallel portion) as a sample was carried out, to evaluate the test specimen in time strength of $10^5$ cycles.

○ : not less than 650 MPa

Δ : not less than 500 MPa and less than 650 MPa

× : less than 500 MPa

Table 4

| | Hard layer ratio d/r | Normal input static breakdown test | Torsional fatigue test |
|---|---|---|---|
| Comparative Example 10 | 0.03 | Δ | × |
| Example 11 | 0.05 | Δ | Δ |
| Example 1 | 0.3 | ○ | Δ |
| Example 12 | 0.35 | ○ | ○ |
| Example 13 | 0.5 | ○ | ○ |
| Example 14 | 0.6 | ○ | Δ |
| Example 15 | 0.7 | ○ | × |

According to the results shown in Table 4, it became clear that if the ratio d/r was 0.05 to 0.6 (example 1 and examples 11 to 14), static torsional strength (static fracture strength) and torsional fatigue strength, which were not less than allowable levels, were obtained. That is, when the ratio d/r exceeded 0.6 (example 15), effects on static torsional strength and torsional fatigue strength were saturated, while the toughness was deteriorated. When the ratio d/r was 0.6, it would appear that the toughness was liable to be lower, as compared with that in a case where the ratio d/r was 0.5. Consequently, it was more preferable that the upper limit of the ratio d/r was 0.5. Further, it became clear that if the ratio d/r was 0.35 to 0.5 (examples 12 and 13), high static torsional strength and high torsional fatigue strength were obtained.

**Claims**

1. A pinion shaft formed using a non-refined steel as a material, comprising:

   a shaft section; and a pinion teeth forming section connecting with the shaft section,
   the pinion teeth forming section comprising pinion teeth and a tooth bottom,
   the pinion teeth forming section and the shaft section being provided with a hardened layer that has been subjected to high frequency quenching and tempering,
   the steel containing 0.45 to 0.55 % by mass of C, 0.10 to 0.50 % by mass of Si, 0.15 to 0.25 % by mass of Mo, and 0.0005 to 0.005 % by mass of B, and
   surface hardnesses of the pinion teeth forming section and the shaft section being 650 to 760 HV in terms of Vickers hardness.

2. The pinion shaft according to claim 1, wherein the steel further contains 0.5 to 1.2 % by mass of Mn.

3. The pinion shaft according to claim 2, wherein the steel further contains at least one type selected from not more than 0.5 % by mass of Cr, not more than 0.5 % by mass of Cu, and not more than 0.5 % by mass of Ni.

4. The pinion shaft according to claim 3, wherein the steel further contains not more than 0.025 % by mass of P, not more than 0.025 % by mass of S, 0.005 to 0.10 % by mass of Ti, and not more than 0.015 % by mass of N, and satisfies following equations 1 and 2, respectively representing the contents (% by mass) of C, Si, Mn, Cr, Mo, Cu, Ni, and Cr by a(C), a(Si), a(Mn), a(Cr), a(Mo), a(Cu), a(Ni), and a(Cr), the residual being composed of Fe and inevitable impurities.

   $$\text{Equation 1} \cdots 0.80 \leqq Ceq \leqq 0.95$$

   where

   $$Ceq = a(C) + 0.07 \times a(Si) + 0.16 \times a(Mn) + 0.20 \times a(Cr) + 0.72 \times a(Mo)$$

   $$\text{Equation 2} \cdots f\ value \leqq 1.0$$

   where

   $$f\ value = 2.78 - 3.2 \times a(C) + 0.05 \times a(Si) - 0.60 \times a(Mn) - 0.55 \times a(Cu) - 0.80 \times a(Ni) - 0.75 \times a(Cr)$$

5. The pinion shaft according to claim 1, wherein Vickers hardnesses of the pinion teeth forming section and the shaft section in a portion deeper than the hardened layer are 260 to 300 HV.

6. The pinion shaft according to claim 1, wherein a ratio D/R of an effective case depth D at which the hardness in the tooth bottom is not more than 450 HV in terms of Vickers hardness to a radius R of the tooth bottom is in a range of 0.1 to 0.5.

7. The pinion shaft according to claim 1, wherein a ratio D/R of an effective case depth D at which the hardness in the

tooth bottom is not less than 450 HV in terms of Vickers hardness to a radius R of the tooth bottom is in a range of 0.2 to 0.4.

**8.** The pinion shaft according to claim 1, wherein a ratio d/r of an effective case depth d at which the hardness in the shaft section is not less than 450 HV in terms of Vickers hardness to a radius r of the shaft section is in a range of 0.05 to 0.6.

**9.** The pinion shaft according to claim 1, wherein a ratio d/r of an effective case depth d at which the hardness in the shaft section is not less than 450 HV in terms of Vickers hardness to a radius r of the shaft section is in a range of 0.35 to 0.5.

FIG. 1

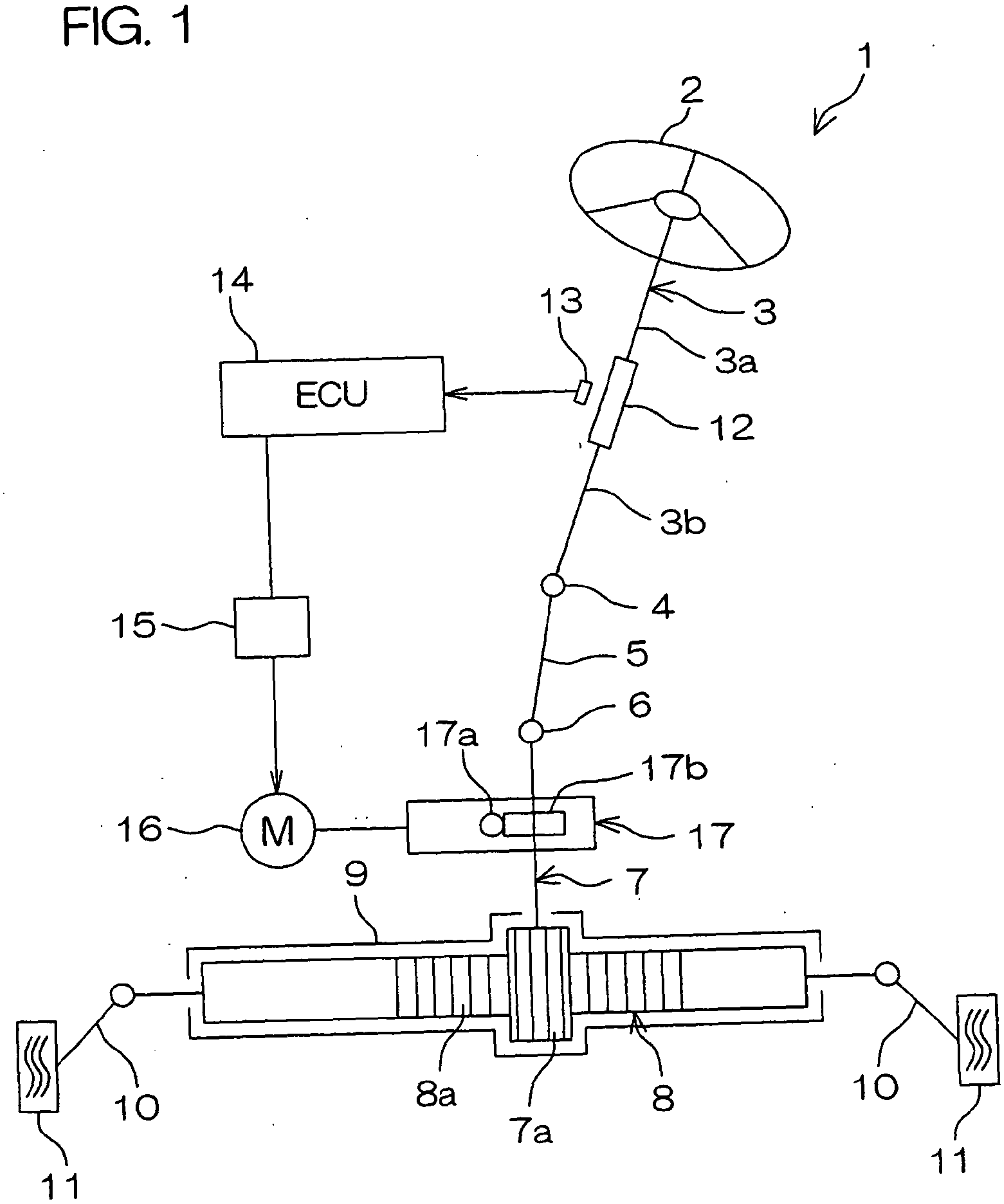

FIG. 2

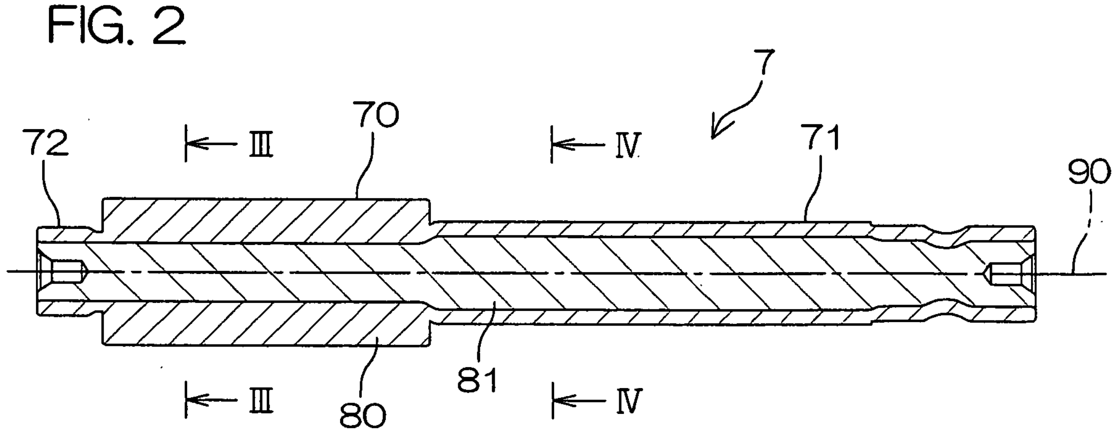


FIG. 3

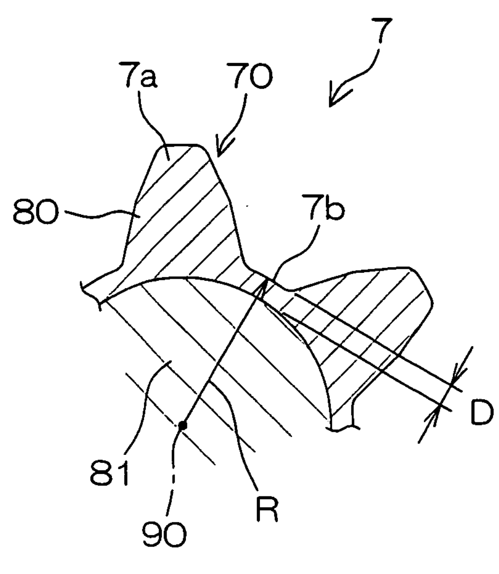

FIG. 4

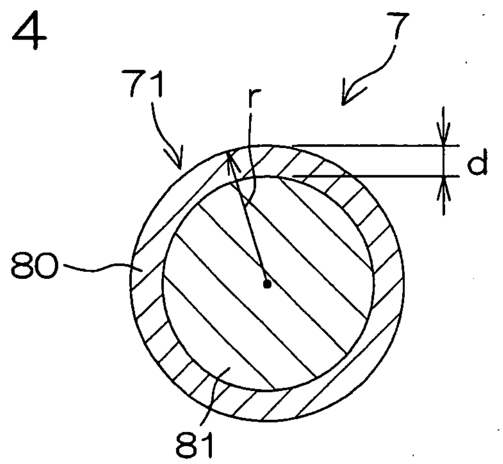


FIG. 5

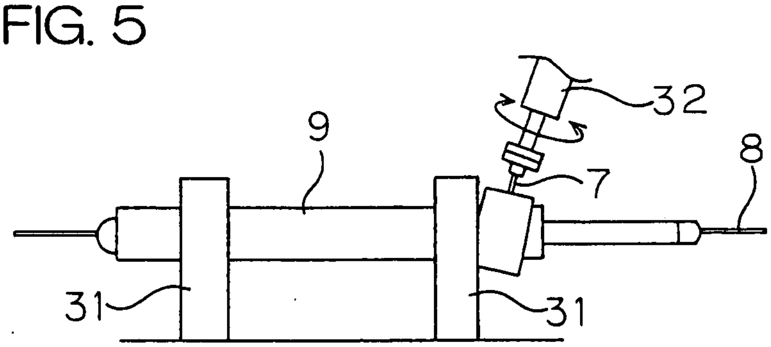


FIG. 6

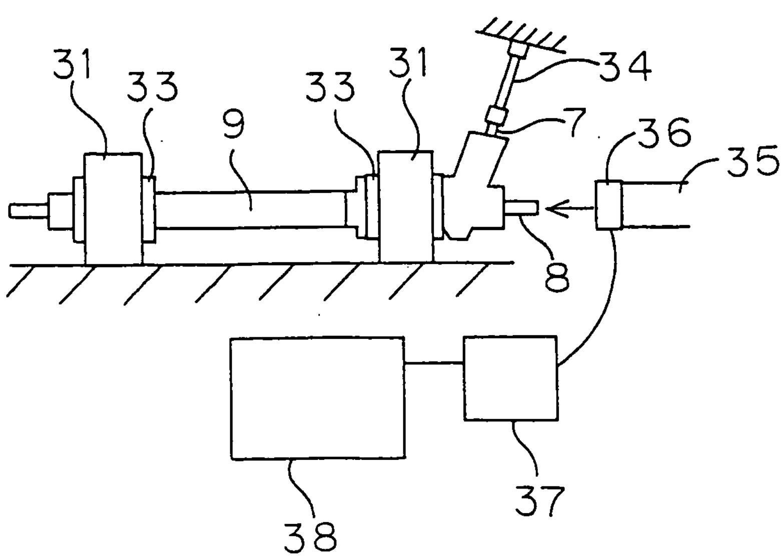

FIG. 7

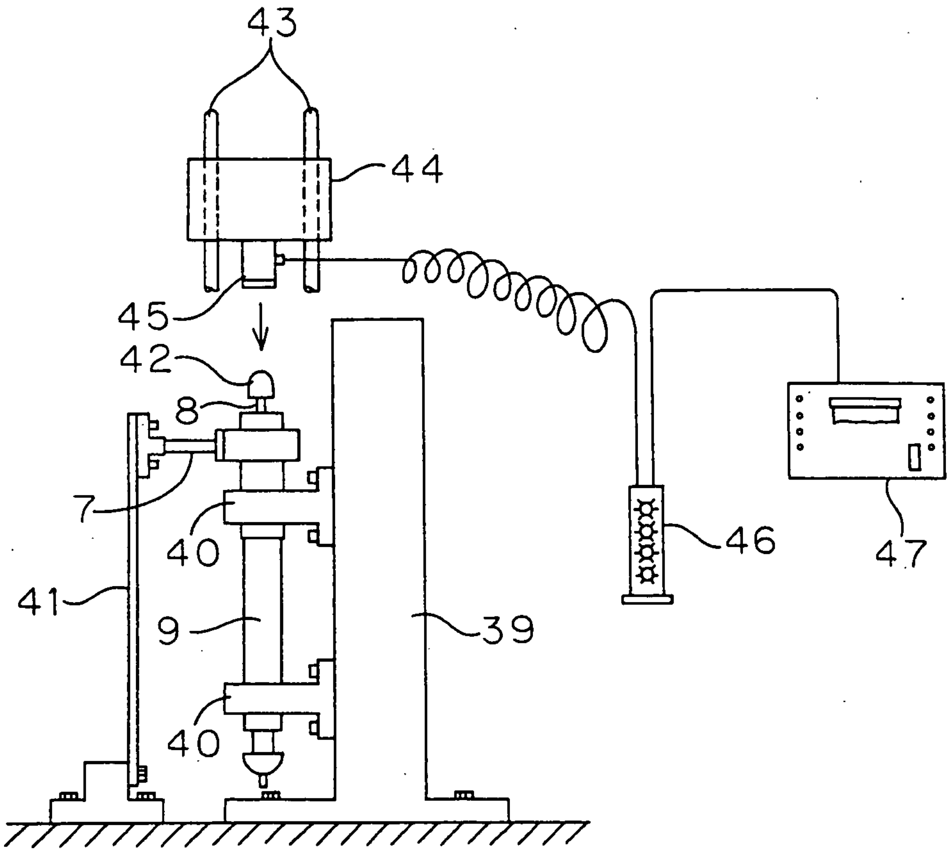

FIG. 8

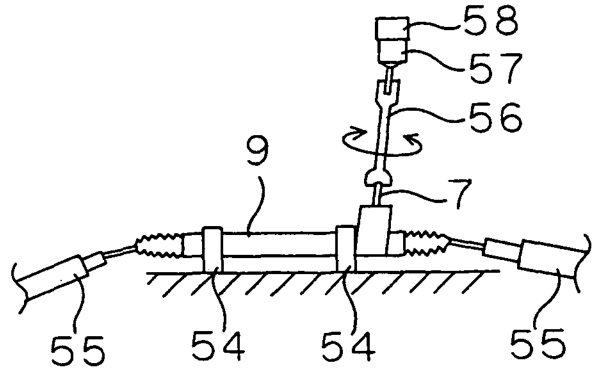


FIG. 9

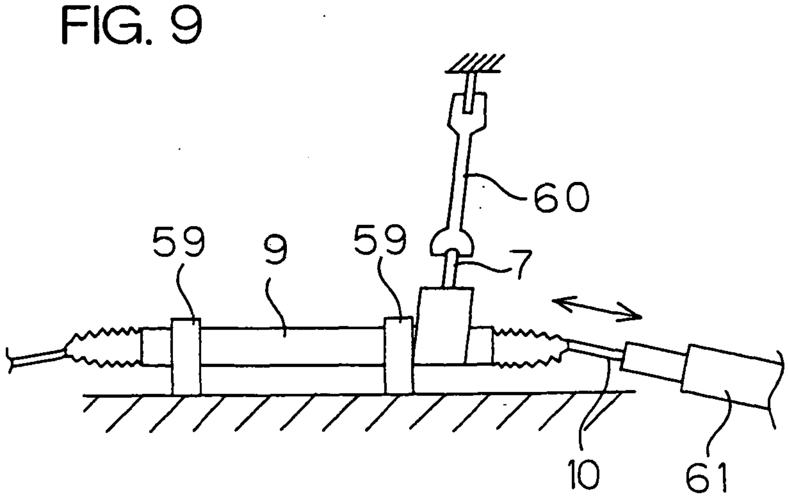

## INTERNATIONAL SEARCH REPORT

International application No.
PCT/JP2005/007563

A. CLASSIFICATION OF SUBJECT MATTER
Int.Cl[7] F16H55/06

According to International Patent Classification (IPC) or to both national classification and IPC

B. FIELDS SEARCHED

Minimum documentation searched (classification system followed by classification symbols)
Int.Cl[7] F16H51/00-55/30, C22C38/00, C22C38/02, C22C38/22, C22C38/32

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2004-27292 A (Sanyo Special Steel Co., Ltd.),<br>29 January, 2004 (29.01.04),<br>Par. Nos. [0001], [0005] to [0008]; Fig. 2<br>(Family: none) | 1-3,5-9<br>4 |
| Y<br>A | JP 2002-194482 A (Sanyo Special Steel Co., Ltd.),<br>10 July, 2002 (10.07.02),<br>Par. Nos. [0017], [0019]; Fig. 2<br>(Family: none) | 1-3,5-9<br>4 |
| Y<br>A | JP 2002-69566 A (Nippon Steel Corp.),<br>08 March, 2002 (08.03.02),<br>Par. Nos. [0027], [0039]; Fig. 1<br>(Family: none) | 1-3,5-9<br>4 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 July, 2005 (07.07.05) | 26 July, 2005 (26.07.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

INTERNATIONAL SEARCH REPORT

International application No.
PCT/JP2005/007563

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2000-144307 A (Sumitomo Metal Industries, Ltd.), 26 May, 2000 (26.05.00), Par. Nos. [0038], [0039] (Family: none) | 3 |
| Y | JP 11-269601 A (Sumitomo Metal Industries, Ltd.), 05 October, 1999 (05.10.99), Par. Nos. [0035], [0036] (Family: none) | 3 |
| A | JP 2003-253395 A (Daido Steel Co., Ltd.), 10 September, 2003 (10.09.03), Par. Nos. [0006], [0024], [0025], [0033]; Fig. 2 (Family: none) | 4,6-9 |
| A | JP 2002-332535 A (Sanyo Special Steel Co., Ltd.), 22 November, 2002 (22.11.02), Par. Nos. [0008] to [0010], [0018]; Fig. 9 & US 2002/0185201 A1 | 4 |
| A | JP 10-324946 A (Komatsu Ltd.), 08 December, 1998 (08.12.98), Par. No. [0021] (Family: none) | 4 |
| A | JP 11-269552 A (Nisshin Steel Co., Ltd.), 05 October, 1999 (05.10.99), Par. No. [0041] (Family: none) | 4 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3036061 B
- JP 2004119360 A